# EUROPÄISCHE PATENTSCHRIFT

(11) **EP 1 555 465 B1**
(45) Veröffentlichungstag und Bekanntmachung des Hinweises auf die Patenterteilung: **11.04.2007**
(21) Anmeldenummer: 05000390.4
(22) Anmeldetag: 11.01.2005
(51) Int. Cl.: F16H 63/32

(54) **Schaltsichel für eine Schaltgabel**
Gear change fork ridge
Gorge de fourchette de boîte de vitesses

(30) Priorität: 15.01.2004 DE 102004002387
(43) Veröffentlichungstag der Anmeldung: 20.07.2005
(73) Patentinhaber: ISE Industries GmbH, 51702 Bergneustadt (DE)
(72) Erfinder: Völpert, Gerhard, 58452 Witten (DE); Beckh, Wilhelm, 58453 Witten (DE)
(74) Vertreter: Wenzel & Kalkoff

(56) Entgegenhaltungen:
- EP-A- 1 347 216
- DE-A1- 1 680 196
- DE-A1- 10 045 506
- DE-A1- 19 645 522
- DE-A1- 19 908 229
- DE-A1- 19 919 271
- US-A- 4 529 080
- US-A- 5 201 237
- PATENT ABSTRACTS OF JAPAN Bd. 2003, Nr. 07, 3. Juli 2003 (2003-07-03) -& JP 2003 083448 A (SUZUKI MOTOR CORP; KOORITSU:KK; HAYASHI KOGYO KK), 19. März 2003 (2003-03-19)

## Beschreibung

Die Erfindung betrifft eine Schaltsichel aus einem Blech oder Blechstreifen für eine Schaltgabel, insbesondere zur Verwendung in handgeschalteten Kfz-Getrieben zur Übertragung einer Schaltbewegung auf eine im Getriebe angeordnete Schaltmuffe, wobei die Schaltsichel zwei mit Kunststoff umspritzte Endpatten aufweist.

In handgeschalteten Kfz-Getrieben werden Schaltgabeln dazu verwendet, bei einem Gangwechsel die den unterschiedlichen Gängen des Getriebes zugeordneten Schaltmuffen, mit den entsprechenden Zahnrädern in Eingriff zu bringen. Die Schaltgabeln können dabei einen Schaltsichelträger aufweisen, an denen die Schaltsicheln drehbar gelagert sind. Die Schaltsicheln greifen im Betrieb in eine Nut an den Schaltmuffen ein, wobei an der Schaltsichel angeordnete Schaltpatten, bspw. eine Mittenabstützpatte im mittleren Bereich sowie Endpatten im Bereich der Lagerzapfen an den Rändern der Nut anliegen und die Schaltbewegung auf die Schaltmuffe übertragen.

Eingesetzt werden Schaltsicheln der Eingangs genannten Art vorzugsweise in Schaltgabeln, deren Gabelschenkel während der Kraftbeaufschlagung in Folge des Schaltvorgangs spürbar unterschiedliche Durchbiegungen im elastischen Bereich aufweisen, da die Verwendung von Schaltsicheln der Durchbiegung entgegenwirkt und die Schaltgabeln stabilisiert. Somit kann auch in diesen Fällen eine annähernd gleiche Kraftverteilung an den Endpatten der Schaltsichel erreicht werden, so daß ein unterschiedlicher Verschleiß der Schaltpatten und ein Verkippen der Schaltmuffe minimiert wird.

Eine Schaltgabel mit einer Schaltsichel ist bspw. aus der DE 100 45 506 A1 bekannt, die alle Merkmale des Oberbegriffes des unabhängigen Anspruchs 1 zeigt.

Bei Schaltvorgängen, bei denen eine Verschiebekraft von der Schaltgabel auf die Schaltmuffe übertragen wird, wirken bereits während eines Differentialdrehzahlausgleichs über einen Synchronkörper als auch beim Einlegen der Verzahnung zum Kraftschluß zwischen der Schaltmuffe und dem jeweiligen Zahnrad erhöhte Andruckkräfte auf die Schaltpatten. Zusätzliche, bei Fehlbedienungen des Getriebes auftretende Schlagstöße erhöhen die mechanischen Belastungen der Getriebekomponenten, die zu einem erheblichen Verschleiß und zu einem vollständigen Ausfall des Getriebes führen können.

Bekannte Schaltsicheln der Eingangs genannten Art werden druckgußtechnisch oder durch Kaltfließpressen oder werkzeugprägeschneidtechnisch aus Messing oder Aluminiumlegierung hergestellt. Derartige Schaltsicheln weisen den Nachteil auf, daß die verwendeten Materialien sowie die Herstellung besonders kostenintensiv und aufwendig ist. Nachteilig ist ferner die Sprödigkeit der bekannten Schaltsicheln sowie deren Neigung in Folge erhöhte Kräfte, wie sie insbesondere bei einer Fehlbedienung auftreten, sich plastisch zu verformen.

Der Erfindung liegt daher die Aufgabe zugrunde, eine Schaltsichel bereitzustellen, die eine hohe Festigkeit aufweist und sich besonders kostengünstig herstellen läßt.

Die Erfindung löst die Aufgabe durch eine Schaltsichel gemäß Anspruch 1. Vorteilhafte Weiterbildungen der Erfindung sind in den abhängigen Ansprüchen angegeben.

Erfindungsgemäß sind die Endpatten derart mit Kunststoff umspritzt, daß sie als Lagerzapfen zur drehbaren Lagerung der Schaltsichel an einem Schaltsichelträger verwendbar sind. Gegenüber den bekannten druckgußtechnisch hergestellten Schaltsicheln zeichnen sich die erfindungsgemäßen Schaltsicheln durch ihre einfache Herstellung sowie durch die geringen Materialkosten aus. Als Ausgangsmaterial können dabei bspw. Bleche oder Blechstreifen verwendet werden, die vorzugsweise bereits die gewünschte Dicke der herzustellenden Schaltsicheln aufweisen, so daß auf eine entsprechende Nachbearbeitung der Schaltsicheln verzichtet werden kann. Derartige Schaltsicheln weisen ferner bei einer ausreichenden Stabilität eine hohe Elastizität auf, die auch bei Fehlbedienungen ein plastisches Verformen der Schaltsicheln zuverlässig verhindert.

Der Formgebungsprozeß, bei dem die Schaltsichel bspw. aus dem Blech oder Blechstreifen ausgeformt wird, kann grundsätzlich in beliebiger Weise erfolgen. Nach einer vorteilhaften Ausgestaltung der Erfindung ist die Schaltsichel jedoch aus dem Blech oder Blechstreifen ausgestanzt oder ausgeschnitten, wobei grundsätzlich alle Stanz- und Schneidverfahren, bspw. auch das Laserschneiden, anwendbar sind.

Die derart hergestellten Schaltsicheln zeichnen sich durch ihre besondere Formgenauigkeit aus, so daß auf zusätzliche Kalibrierungsarbeiten verzichtet werden kann. Zudem unterbleiben beim Ausschneiden oder Ausstanzen unerwünschte Gefügeänderungen im Material, die die Stabilität und Belastbarkeit der Schaltsichel beeinflussen können. Darüber hinaus kann durch das Laserschneiden, bei dem die Wärmeeinbringung nur gering ist und sich an der Oberfläche konzentriert, eine Oberflächenhärtung der Schaltsichel erzielt werden.

Das Blechmaterial zur Herstellung der Schaltsicheln ist nach einer vorteilhaften Weiterbildung der Erfindung aus einem NE-Metall, Aluminium oder Stahl hergestellt. Diese Materialien zeichnen sich durch ihre besonders geringen Material- und Herstellungskosten aus, die insbesondere aus deren einfachen walztechnischen Herstellung resultiert. Die Verwendung von Aluminium bietet zudem den Vorteil, das Gewicht der Schaltsicheln in ergänzender Weise zu reduzieren.

Nach einer besonders vorteilhaften Ausgestaltung der Erfindung weist die Schaltsichel mindestens eine Mittenabstützpatte auf. Die Schaltpatten dienen dabei in der Einbaulage der Schaltsichel an einer Schaltmuffe dazu, eine gleichmäßige Kraftübertragung auf die Schaltmuffe zu gewährleisten, wobei nur die Schaltpatten an der Nutwand der Schaltmuffe anliegen. Die Verwendung einer Mittenabstützpatte verhindert in ergänzender Weise ein Verkippen der Schaltmuffe während des Verschiebevorgangs. Die Endpatten sind im Endbereich der bogenförmig gekrümmten Schaltsichel angeordnet.

Eine ergänzende Verbesserung der Kraftübertragung, sowie eine Reduzierung des Verschleißaufkommens kann dadurch erzielt werden, daß die Schaltsichel auch im Bereich ihrer Mittenabstützpatte mit einem Kunststoff umspritzt ist. Der Kunststoff, der vorzugsweise hitzestabilisiert, stoß- und schlagfest sowie ölbeständig ist und eine gute Verbindung zu einem Metallkörper aufweist, bspw. ein Kunststoff aus hochverschleißfestem Polyamid, erhöht dabei die Verschleißfestigkeit und die Gleiteigenschaften der Schaltsichel, deren Steifigkeit durch den als Skelett fungierenden Metallkörper erzielt wird.

Im Bereich der Kunststoffumspritzung dient der Metallkörper der Wärmeabführung bzw. Kühlfunktion wodurch ein Überhitzen der Kunststoffumspritzungen wirkungsvoll vermieden wird. Diese bieten zudem den Vorteil, einer metallischen Schwingungsentkopplung mit einer daraus resultierenden Geräuschreduktion. In Folge dessen und in Verbindung mit der hohen Elastizität des Metallkörpers treten nur sehr geringe Synchron- und Einlegekraftspitzen auf, wodurch der Schaltkomfort in ergänzender Weise spürbar gesteigert werden kann.

Die Ausgestaltung der Kunststoffumspritzungen ist dabei frei wählbar, wird sich in der Regel jedoch an der Form der jeweiligen Schaltmuffennut orientieren. Erfindungsgemäß sind die Endpatten der Schaltsichel derart mit Kunststoff umspritzt sind, daß sie als Lagerzapfen zur drehbaren Lagerung der Schaltsicheln an einem Schaltsichelträger verwendbar sind. Somit kann auf eine zusätzliche Umformung der ausgeschnittenen Schaltsicheln in den Anlenkpunkten an den Schaltsichelträger verzichtet werden. Zudem können die positiven Eigenschaften des Kunststoffes genutzt werden.

Zur Herstellung einer Schaltsichel wird diese aus einem Blech, insbesondere einem Blechstreifen ausgeschnitten. Dieses Verfahren läßt sich besonders kostengünstig mit herkömmlichen Verfahren durchführen, wobei bei der Verwendung von auf die geforderte Dicke der Schaltsichel abgestimmten Blechen eine weitere diesbezügliche Bearbeitung unterbleiben kann.

Zur Herstellung lassen sich grundsätzliche alle bekannten Schneidverfahren verwenden, wobei insbesondere das Laserschneiden die Möglichkeit einer besonders genauen kostengünstigen Bearbeitung bietet. Das Laserschneiden ermöglicht es zudem, die Oberfläche der Schaltsichel während des Schneidprozesses zu härten, wodurch die Steifigkeit der Schaltsichel in ergänzender Weise gesteigert wird, ohne daß sich die gewünschte Elastizität verringert.

In einem nachfolgenden Herstellungsschritt kann die Schaltsichel mit Kunststoff umspritzt werden. Dieser Produktionsschritt kann sich direkt an das Ausschneiden der Schaltgabeln anschließen und ermöglicht so auf besonders einfache Weise die Herstellung einer Schaltsichel, die im Einsatz eine metallische Schwingungsentkopplung zwischen der Schaltmuffe und der Schaltsichel bewirkt und zudem besonders gute Gleiteigenschaften aufweist.

Ein Ausführungsbeispiel der Erfindung wird nachstehend mit Bezug auf die Zeichnungen näher erläutert. In den Zeichnungen zeigen:
- Fig. 1: eine perspektivische Ansicht eines Schaltsichel-Grundkörpers;
- Fig. 2: eine perspektivische Ansicht der Schaltsichel von Fig. 1 mit kunststoffumspritzten End- und einer kunststoffumspritzten Mittenpatte;
- Fig. 3: eine Schaltsichel entlang der Schnittlinie A-A von Fig. 2 und
- Fig. 4: eine perspektivische Ansicht einer Schaltgabe mit einer Schaltsichel von Fig. 2.

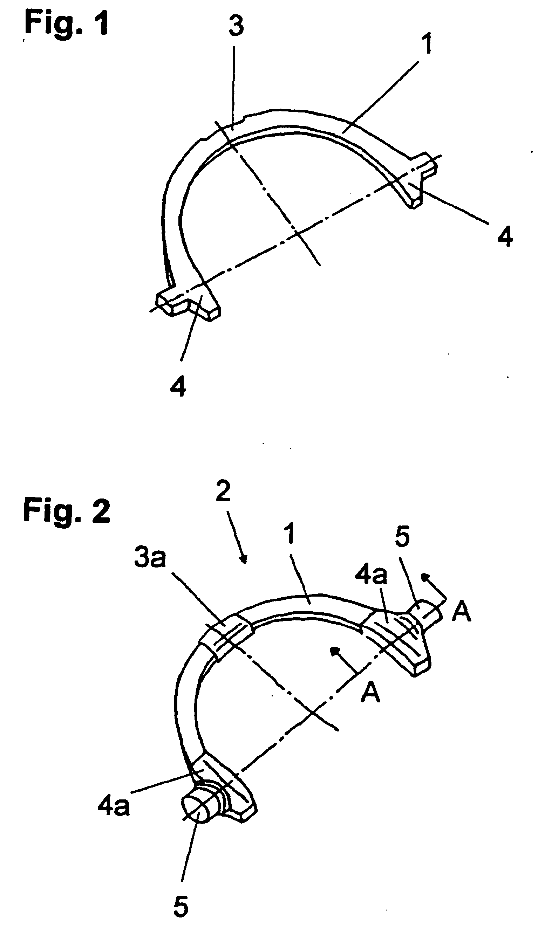

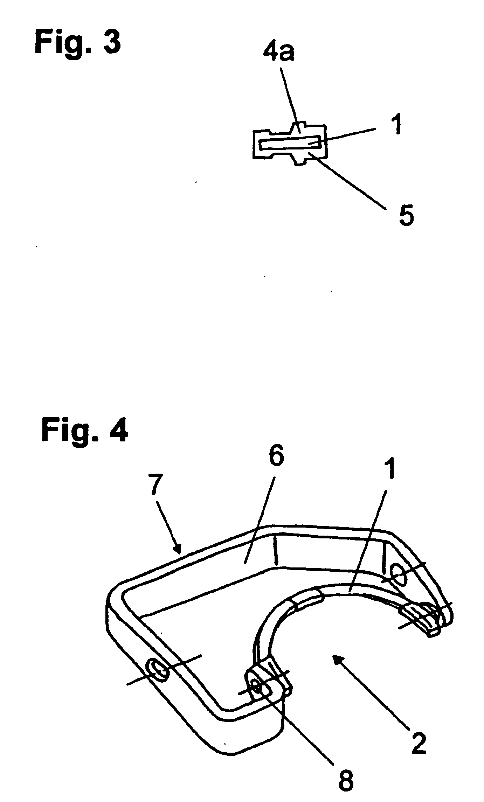

Fig. 1 zeigt einen metallischen Schaltsichel-Grundkörper 1, der aus einem hier nicht dargestellten Blechstreifen herausgeschnitten wurde. Der Schaltsichel-Grundkörper 1 weist eine bogenförmige, annähernd halbkreisförmige Gestalt auf, an deren Enden Endpatten 4 ausgebildet sind, in deren Bereich eine aus dem Schaltsichel-Grundkörper 1 gebildete Schaltsichel 2 an einem Schaltsichelträger 6 drehbar gelagert ist (Fig. 4).

Zur Herstellung einer in Fig. 2 dargestellten Schaltsichel 2 mit separat ausgebildeten Kontaktflächen 3a, 4a zur Anlage an einer hier nicht dargestellten Schaltmuffe ist der Schaltsichel-Grundkörper 1 im Bereich seiner Endpatten 4 sowie im Bereich seiner Mittenpatte 3 mit Kunststoff umspritzt. Die derart gebildete Mittenabstützpatte 3a sowie die Kunststoff-Endpatten 4a liegen im Betrieb der aus dem Schaltsichelträger 6 und der Schaltsichel 2 gebildeten Schaltgabel 7 an den Nutwänden einer Nut der Schaltmuffe an.

Um eine drehbare Lagerung der Schaltsichel 2 in den Lagerbohrungen 8 an dem Schaltsichelträger 6 zu ermöglichen, ist der Schaltsichel-Grundkörper 1 im Bereich der Endpatten 4 mit im Querschnitt kreisförmigen Lagerzapfen 5 aus Kunststoff umspritzt, so daß eine mechanische Überarbeitung der Endpatten 4 des Grundkörpers 1 unterbleiben kann (Fig. 3).

Die derart aus der Schaltsichel 2 und dem Schaltsichelträger 6 gebildete Schaltgabel 7 kann in der dargestellten Form problemlos in herkömmlichen Kfz-Getrieben, insbesondere in handgeschalteten Kfz-Getrieben verwendet werden.

## Patentansprüche

1. Schaltsichel (2) aus einem Blech oder Blechstreifen für eine Schaltgabel, zur Verwendung in handgeschalteten Kfz-Getrieben zur Übertragung einer Schaltbewegung auf eine im Getriebe angeordnete Schaltmuffe, wobei
die Schaltsichel (2) zwei mit Kunststoff umspritzte, im Betrieb an der Nutwand der Schaltmuffe anliegende Endpatten (4) aufweist,
**dadurch gekennzeichnet, daß**
die Endpatten (4) derart mit Kunststoff umspritzt sind, daß sie als Lagerzapfen (5) zur drehbaren Lagerung der Schaltsichel (2) an einem Schaltsichelträger (6) verwendbar sind.

2. Schaltsichel nach Anspruch 1, **dadurch gekennzeichnet, daß** diese aus einem Blech oder Blechstreifen ausgestanzt oder ausgeschnitten ist.

3. Schaltsichel nach Anspruch 1 oder 2, **dadurch gekennzeichnet, daß** das Blech oder der Blechstreifen aus einem NE-Metall, Aluminium oder Stahl hergestellt ist.

4. Schaltsichel nach einem oder mehreren der vorhergehenden Ansprüche, **dadurch gekennzeichnet, daß** diese eine Mittenabstützpatte (3) aufweist.

5. Schaltsichel nach Anspruch 4, **dadurch gekennzeichnet, daß** diese im Bereich ihrer Mittenabstützpatte (3) mit einem Kunststoff umspritzt ist.

6. Schaltsichel nach einem oder mehreren der vorhergehenden Ansprüche, **dadurch gekennzeichnet, daß** als Kunststoff ein hochverschleißfester Polyamid verwendbar ist.

## Claims

1. A gear shift fork insert (2) made of sheet metal or a sheet metal strip for a gearshift fork for use in a manual gearbox of an automobile for transmitting a shifting movement to a sliding sleeve arranged in the gearbox, wherein the gear shift fork insert (2) has two end plates (4) spray coated in plastic material adjacent to the groove side wall of the sliding sleeve in operation,
**characterized in that**
said end plates (4) are spray coated in plastic material in such a way that they are usable as bearing journals (5) for pivotably supporting the gear shift fork insert (2) on a gear shift fork insert carrier (6).

2. The gear shift fork insert according to claim 1, **characterized in that** it is punched or cut from sheet metal or a sheet metal strip.

3. The gear shift fork insert according to claim 1 or 2, **characterized in that** said sheet metal or sheet metal strip is of a nonferrous metal, aluminium or steel.

4. The gear shift fork insert according to any one or more of the preceding claims, **characterized in that** it has a central support plate (3).

5. The gear shift fork insert according to claim 4, **characterized in that** it is spray coated with plastic material in the area of its central support plate (3).

6. The gear shift fork insert according to any one or more of the preceding claims, **characterized in that** a highly wear-resistant polyamide is usable as said plastic material.

## Revendications

1. Gorge (2) en tôle ou en bande de tôle d'une fourchette de boîte de vitesses, destinée à être utilisée dans des boîtes de vitesses manuelles d'automobile pour transmettre un mouvement de commutation à un manchon de commutation disposé dans la boîte de vitesses, la gorge (2) comportant deux pattes terminales (4) enrobées de matière plastique par extrusion, s'appuyant en marche contre la paroi à rainure du manchon de commutation, **caractérisée en ce que** les pattes terminales (4) sont enrobées à tel point de matière plastique par extrusion qu'elles peuvent être utilisées comme tournions (5) pour le logement rotatif de la gorge (2) sur un support de gorge (6).

2. Gorge selon la revendication 1, **caractérisée en ce que** celle-ci est découpée à la matrice ou découpée à partir d'une tôle ou d'une bande de tôle.

3. Gorge selon la revendication 1 ou 2, **caractérisée en ce que** la tôle ou la bande de tôle est fabriquée en métal non ferreux, en aluminium ou en acier.

4. Gorge selon l'une ou plusieurs des revendications précédentes, **caractérisée en ce que** celle-ci comporte une patte médiane d'appui (3).

5. Gorge selon la revendication 4, **caractérisée en ce que** celle-ci est enrobée de matière plastique par extrusion dans la zone de sa patte médiane d'appui (3).

6. Gorge selon l'une ou plusieurs des revendications précédentes, **caractérisée en ce que** du polyamide très résistant à l'usure peut être utilisé comme matière plastique.
